# EUROPÄISCHE PATENTSCHRIFT

(11) **EP 2 652 868 B1**
(45) Veröffentlichungstag und Bekanntmachung des Hinweises auf die Patenterteilung: **06.03.2019**
(21) Anmeldenummer: 11787789.4
(22) Anmeldetag: 10.11.2011
(51) Int. Cl.: H02P 13/06

(54) **Regelbarer Transformator mit Stufenschalter**
Adjustable transformer with tap changer
Transformateur réglable avec changeur de prise

(30) Priorität: 17.12.2010 DE 102010054953
(43) Veröffentlichungstag der Anmeldung: 23.10.2013
(73) Patentinhaber: Maschinenfabrik Reinhausen GmbH, 93059 Regensburg (DE)
(72) Erfinder: BISKOPING, Matthias, 52062 Aachen (DE); VON BLOH, Jochen, 52072 Aachen (DE); DOHNAL, Dieter, 93138 Lappersdorf (DE); VIERECK, Karsten, 93059 Regensburg (DE)
(86) Internationale Anmeldenummer: PCT/EP2011/005640
(87) Internationale Veröffentlichungsnummer: WO 2012/079666

(56) Entgegenhaltungen:
- DE-A1- 2 248 166
- DE-A1- 19 848 428
- DE-C2- 19 747 712

## Beschreibung

Die Erfindung betrifft einen Stufenschalter zur Spannungsregelung mit Halbleiter-Schaltelementen.

Bereits die DE 22 48 166 A beschreibt einen regelbaren Transformator mit Halbleiter-Schaltelementen. Dabei besteht die Sekundärwicklung aus einer bestimmten Anzahl von Regelwicklungsteilen, die in einer gewissen Anzahl von in Serie geschalteten Wicklungsgruppe zusammengefasst sind, wobei jede Wicklungsgruppe zwei oder drei parallel geschaltete Regelwicklungsteile enthält. Dabei ist jeder Regelwicklungsteil mit einem kontaktlosen Schaltelement versehen. In dieser Schrift ist auch eine andere Variante beschrieben, wobei die Sekundärwicklung des Transformators aus einer Gruppe von in Serie geschalteten Regelwicklungsteilen besteht, wobei jeder Regelwicklungsteil vier kontaktlose Schaltelemente enthält. Die Anordnung ist derart ausgestattet, dass die Richtung der Spannung an den Klemmen des Regelwicklungsteiles umkehrbar sowie auch wahlweise der gesamte Regelwicklungsteil überbrückbar ist.

Aus der DE 25 08 013 A ist eine weitere Vorrichtung zur stufenweisen Schaltung der Sekundärspannung eines Transformators bekannt. Auch hierbei ist die Sekundärwicklung in Teilwicklungen gruppiert, wobei ebenfalls Halbleiter-Schaltelemente zur Umschaltung vorgesehen werden können.

Die DE 197 47 712 C2 beschreibt eine Anordnung eines Stufenschalters ähnlicher Art an einen als Spartransformator ausgebildeten. Stufentransformator. Hierbei sind ebenfalls einzelne Wicklungsteile vorgesehen, die einzeln und voneinander unabhängig beschaltbar sind. Neben festen Anzapfungen der Regelwicklung sind bei dieser Anordnung zusätzlich separate Wicklungsteile an- bzw. zuschaltbar.

Aus der WO 95/27931 sind verschiedene Ausführungsformen eines weiteren Stufenschalters zur unterbrechungslosen Lastumschaltung bekannt, wobei ebenfalls Thyristoren als Schaltelemente dienen. Mittels antiparallel geschalteter Thyristorpaare sind dabei unterschiedliche Wicklungsteile einer Stufenwicklung als Teil der Sekundärwicklung des jeweiligen Stufentransformators zu- oder abschaltbar. Zur Realisierung einer möglichst feinstufigen Spannungsregelung bei einer begrenzten Zahl vorhandener Wicklungsanzapfungen wird in dieser Schrift ferner ein als "discrete circle modulation" bezeichnetes Verfahren vorgeschlagen, bei dem die Thyristoren derart angesteuert werden, dass sich Zwischenwerte der Sekundärspannung ergeben.

US 4,220,911 beschreibt eine weitere Stufenschalteranordnung, die antiparallele Thyristorpaare zur Umschaltung nutzt. Die Sekundärwicklung ist in einen festen Regelwicklungsteil sowie eine Mehrzahl an Teilwicklungen unterteilt. Die Teilwicklungen umfassen dabei jeweils eine Anzapfung, die jede Teilwicklung in eine erste und eine zweite Sektion unterteilt. Mittels der antiparallelen Thyristorpaare können eine oder beide Sektionen der jeweiligen Teilwicklung mit oder gegen den Regelwicklungsteil geschaltet werden oder überbrückt werden.

Bei den aus dem Stand der Technik bekannten Lösungen übernehmen Halbleiter-Schaltelemente de facto die Funktion des mechanischen Wählerarmes bei klassischen, mechanischen Stufenschaltern. Mittels der Halbleiter-Schaltelemente können einzelne Wicklungsanzapfungen der Regelwicklungen selbst zu- oder abgeschaltet werden. Es ist auch möglich, die Regelwicklung in Teilwicklungen zu unterteilen, die separat zugeschaltet werden können.

Nachteilig bei diesem Stand der Technik sind der hohe Schaltungsaufwand und die notwendige spezielle Anpassung der Halbleiter-Schaltelemente.

Ein weiterer Nachteil des Standes der Technik besteht darin, dass beim Ausfall einzelner Halbleiter-Schaltelemente keine Regelung oder jedenfalls keine befriedigende Regelung mehr möglich ist.

Aufgabe der Erfindung ist es, einen Regelbaren Transformator mit Stufenschalter mit Halbleiter-Schaltelementen anzugeben, der einfach aufgebaut ist. Weiterhin soll er einen modularen, erweiterbaren Aufbau besitzen. Schließlich soll der erfindungsgemäße Stufenschalter eine hohe Regelsicherheit und -genauigkeit auch beim Ausfall einzelner Schaltelemente, quasi als Notbetrieb, ermöglichen.

Diese Aufgabe wird durch einen Regelbaren Transformator mit Stufenschalter mit den Merkmalen des ersten Patentanspruches gelöst. Die Unteransprüche betreffen besonders vorteilhafte Weiterbildungen der Erfindung.

Die allgemeine erfinderische Idee besteht darin, den Stufenschalter modular aufzubauen.

Die einzelnen Module des erfindungsgemäßen Regelbaren Transformator mit Stufenschalter umfassen jeweils eine elektrische Teilwicklung der Regelwicklung, die mit der Regelwicklung magnetisch gekoppelt ist, d. h. auf den jeweiligen Trafoschenkel aufgebracht ist. Sie umfassen weiterhin beidseitig parallel dazu jeweils einen Überbrückungspfad, dieser jeweils bestehend aus einer Reihenschaltung von jeweils zwei Halbleiter-Schaltelementen. Zwischen den jeweils in Reihe geschalteten Halbleiter-Schaltelementen jedes Überbrückungspfades ist eine Mittenanzapfung herausgeführt.

Eine Mittenanzapfung eines ersten Moduls des erfindungsgemäßen Stufenschalters ist mit dem Sternpunkt bzw. der Lastableitung verbunden.

Eine Mittenanzapfung des letzten Moduls des erfindungsgemäßen Stufenschalters ist mit dem Ende der Wicklung des Transformators, an der geregelt werden soll, verbunden.

Die andere Mittenanzapfung des ersten Moduls ist mit einer Mittenanzapfung des zweiten Modules, dessen andere Mittenanzapfung mit einer Mittenanzapfung des dritten Modules, dessen andere Mittenanzapfung mit einer Mittenanzapfung des vierten Modules verbunden usw. bis zum letzten Modul.

Erfindungsgemäß sind die elektrischen Wicklungen in den einzelnen Modulen unterschiedlich dimensioniert.

Weist im ersten Modul die dortige Wicklung eine bestimmte Zahl von Windungen auf, besitzt die elektrische Wicklung im zweiten Modul eine Windungszahl, die ein Mehrfaches darstellt. Ebenfalls die Windungen in den weiteren Modulen.

Besonders vorteilhaft ist es, wenn bei drei vorhandenen Modulen die einzelnen Wicklungen in den Modulen im Verhältnis 1:3:6 oder 1:3:9 ausgebildet sind.

Sind vier Module vorgesehen, ist es besonders vorteilhaft, deren Wicklungen in den Verhältnissen 1:3:6:10 zu dimensionieren.

Es ist im Rahmen der Erfindung möglich, die Zahl der einzelnen Module, die in der Gesamtheit den erfindungsgemäßen Stufenschalter bilden, zu variieren.

Der erfindungsgemäße Regelbaren Transformator mit Stufenschalter bietet eine Reihe von Vorteilen: Zunächst einmal ist keine besondere Ausbildung der Regelwicklung, in der Regel der Oberspannungswicklung, des Regeltransformators erforderlich. Der Stufenschalter selbst besitzt einen einfachen, modularen Aufbau und ist leicht an unterschiedliche Spannungsstufen anpassbar. Damit ist auch später noch die Anpassung eines vorgefundenen Regeltransformators an veränderte Regelaufgaben und -bereiche möglich. Weiterhin sind beim Anschluss eines erfindungsgemäßen Stufenschalters nur wenige Leitungen hin zu der Transformatorenwicklung erforderlich; das bisherige Leitungsgerüst von jeder Anzapfung der Regelwicklung hin zum Stufenschalter bzw. den Schaltmitteln entfällt. Schließlich ist beim erfindungsgemäßen Stufenschalter eine redundante Erzeugung einzelner Teilspannungen möglich; beim im praktischen Betrieb nie auszuschließenden Ausfall einzelner Schaltelemente kann die Regelung dennoch im Wesentlichen fortgeführt werden.

Die Erfindung soll nachstehend an Hand von Zeichnungen beispielhaft noch näher erläutert werden. Es zeigen:
- Figur 1: eine erste Ausführungsform eines erfindungsgemäßen Stufenschalters, umfassend Teilmodule
- Figur 2: eine Beschaltungstabelle eines solchen Stufenschalters
- Figur 3: eine weitere Beschaltungstabelle eines modifizierten Stufenschalters
- Figur 4: eine zweite Ausführung eines erfindungsgemäßen Stufenschalters
- Figur 5: eine Umschaltungstabelle des Stufenschalters gemäß Figur 4
- Figur 6: ein Modul eines ersten erfindungsgemäßen Stufenschalters allein
- Figur 7: ein Modul eines zweiten erfindungsgemäßen Stufenschalters allein
- Figur 8: eine modifizierte Anordnung des in Figur 1 dargestellten Stufenschalters an eine Regelwicklung eines Stufentransformators.

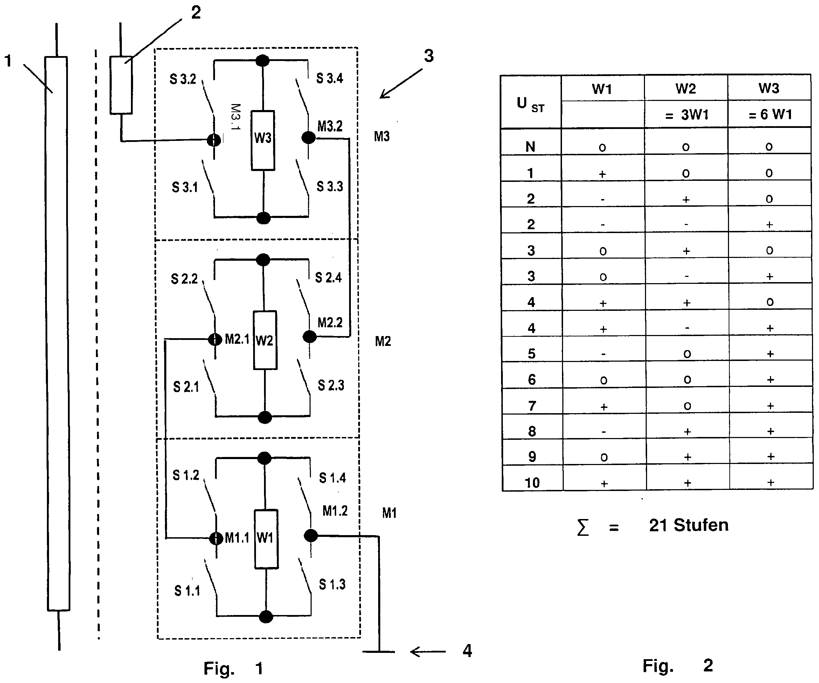

Figur 1 zeigt einen zu regelnden Transformator, bestehend aus einer Unterspannungswicklung 1 und einer Oberspannungswicklung 2, mit hier drei separaten Teilwicklungen B1... B3, an die ein erfindungsgemäßer Stufenschalter 3 angeschaltet ist. Die punktierte Linie symbolisiert dabei den Umfang des Stufenschalters 3, der hier aus drei einzelnen Modulen M1, M2, M3 besteht.

Das erste Modul M1 umfasst die erste Teilwicklung W1 sowie beidseitig davon zwei Überbrückungspfade, die jeweils eine Reihenschaltung aus zwei Halbleiter-Schaltelementen S1.1 und S1.2 bzw. S1.3 bzw. S1.4 umfassen. Jeweils zwischen den beiden in Reihe geschalteten Schaltelementen ist eine Mittenanzapfung M1.1 bzw. M1.2 vorgesehen.

Die einzelnen Halbleiter-Schaltelemente sind hier wie auch in den nachfolgenden Figuren nur schematisch als einfache Schalter dargestellt. Sie umfassen in der Praxis parallel geschaltete Thyristorpaare, IGBT's oder andere Halbleiter-Schaltelemente. Sie können auch jeweils eine Reihen- oder Parallelschaltung mehrerer solcher einzelner Halbleiter-Schalterelemente umfassen.

Die eine Mittenanzapfung M1.2 ist mit dem Sternpunkt 4 elektrisch verbunden. Die andere Mittenanzapfung M1.1 steht mit einer Mittenanzapfung M2.1 eines zweiten Moduls M2 in Verbindung. Dieses zweite Modul M2 ist identisch aufgebaut; es umfasst ebenfalls eine Teilwicklung W2 sowie die beiden Reihenschaltungen aus jeweils zwei Halbleiter-Schaltelementen S2.1 und S2.2 bzw. S2.3 und S2.4. Ebenfalls sind zwischen den jeweiligen Reihenschaltungen wieder Mittenanzapfung M2.1 und M2.2 vorgesehen. Die Beschaltung der einen Mittenanzapfung M2.1 mit dem ersten Modul M1 wurde bereits erläutert; die zweite Mittenanzapfung M2.2 ihrerseits ist mit einer Mittenanzapfung M3.2 eines dritten Moduls M3 verbunden.

Dieses dritte Modul M3 ist wiederum identisch aufgebaut. Es umfasst wiederum eine Teilwicklung W3 sowie die beiden Reihenschaltungen aus Halbleiter-Schaltelementen S3.1 und S3.2 bzw. S3.3 und S3.4 sowie die dazwischen liegenden Mittenanzapfungen M3.1 und M3.2. Die bisher noch nicht erwähnte Mittenanzapfung M3.1 des dritten und hier letzten Moduls M3 ist mit dem Ende der Oberspannungswicklung 2 elektrisch verbunden.

Die beschriebenen hier drei Module M1...M3 unterscheiden sich nur durch die Bemessungen der jeweiligen Teilwicklungen W1...W3.

Die Teilwicklung W2 im zweiten Modul M2 weist hier die dreifache Windungszahl der Teilwicklung W1 im ersten Modul M1 auf. Die Teilwicklung W3 im dritten Modul M3 weist hier die sechsfache Windungszahl der Teilwicklung W1 im ersten Modul M1 auf.

Figur 2 zeigt eine Beschaltungstabelle des in Figur 1 dargestellten erfindungsgemäßen Stufenschalters. Das Symbol "0" bedeutet, dass die entsprechende Teilwicklung nicht eingeschaltet, d. h. überbrückt ist. Das Symbol "+" bedeutet, dass die entsprechende Teilwicklung zur Oberspannungswicklung 2 im gleichen Sinn dazu geschaltet ist. Das Symbol "-" schließlich bedeutet, dass die entsprechende Tellwicklung gegensinnig zur Oberspannungswicklung 2 geschaltet ist. In der Beschaltungstabelle sind die zehn Spannungsstufen dargestellt, die sich ergeben, wenn man zur Stufenspannung der Oberspannungswicklung 2 weitere Teilspannungen hinzufügt. Diese Teilspannungen ergeben sich durch die unterschiedliche Zuschaltung, Gegenschaltung oder Überbrückung der einzelnen Wicklungsteile W1 ...W3. Es ist zu sehen, dass sich bestimmte Spannungsstufen redundant, d. h. durch unterschiedliche Schaltzustände, erzeugen lassen. Ebenso, in der Tabelle aber nicht dargestellt, ist es möglich, in der anderen Richtung entsprechende gestufte Teilspannungen von der Spannung in der Oberspannungswicklung 2 abzuziehen. Insgesamt ergeben sich bei dieser Ausführungsform mithin einundzwanzig mögliche Spannungsstufen. In der Mittelstellung, hier mit N bezeichnet, ist der Stufenschalter funktionslos. Das Ende der Oberspannungswicklung 2 steht elektrisch dann direkt mit dem Sternpunkt 4 in Verbindung. Das erläuterte Zu- bzw. Gegenschalten oder die Überbrückung der einzelnen Wicklungsteile W1...W3 erfolgt erfindungsgemäß durch eine entsprechende Beschaltung der Halbleiter-Schaltelemente S1.1...S3.4.

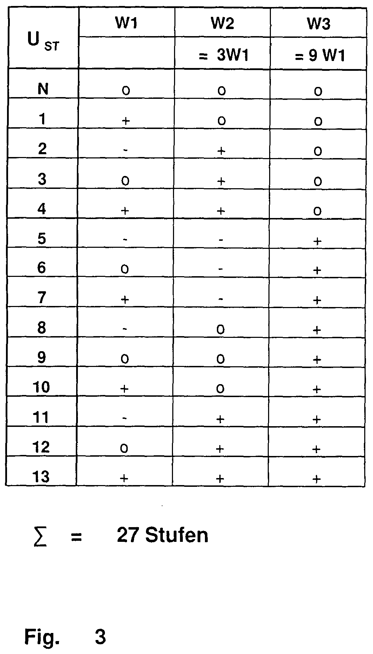

Figur 3 zeigt eine weitere Beschaltungstabelle. Hierbei ist gegenüber der eben erläuterten Ausführungsform lediglich die Dimensionierung der Teilwicklung W3 verändert, die jetzt das Neunfache der ersten Teilwicklung W1 umfasst. In dieser Stellung ergeben sich insgesamt siebenundzwanzig Spannungsstufen.

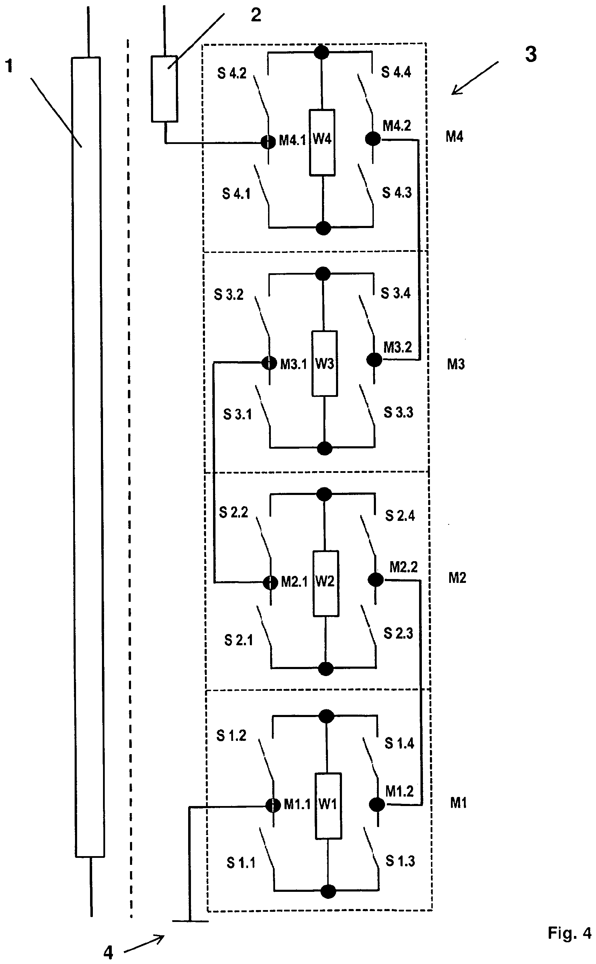

Figur 4 zeigt eine weitere Ausführungsform eines erfindungsgemäßen Stufenschalters, bei dem ein weiteres Modul M4 dazugekommen ist. Die kaskadierende Beschaltung zwischen den einzelnen Modulen M1...M4 ist unverändert. Das hinzugekommene Modul M4 weist ebenfalls parallel Halbleiter-Schaltelemente S4. 1 und S4.2 sowie S4.3 und S4.4 auf, ebenso dazwischenliegende Mittenanzapfungen M4.1 und M4.2. Die Mittenanzapfung M4.1 ist wiederum mit der Oberspannungswicklung 2 verbunden, während die Mittenanzapfung M4.2 mit der Mittenanzapfung M3.2 des Moduls M3 verbunden ist.

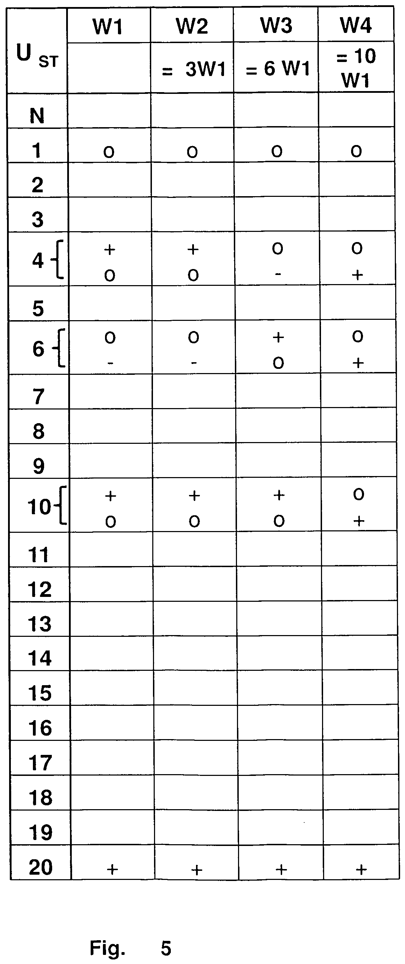

Figur 5 zeigt auszugsweise eine Beschaltungstabelle des in Figur 4 dargestellten erweiterten Stufenschalters. Es sind hier nicht alle Spannungsstufen dargestellt, die sich durch die entsprechende Beschaltung der einzelnen Halbleiterschalter ergeben. Vielmehr soll hier exemplarisch an Hand der Spannungsstufen 4, 6 und 10 gezeigt werden, dass sich dieser auf redundante Weise durch unterschiedliches Zu- oder Abschalten der einzelnen Teilwicklungen W1...W4 ergeben können. Dabei ist die neue Teilwicklung W4 des Moduls M4 derart dimensioniert, dass sie die zehnfache Windungszahl der ersten Teilwicklung W1 des ersten Moduls M1 umfasst.

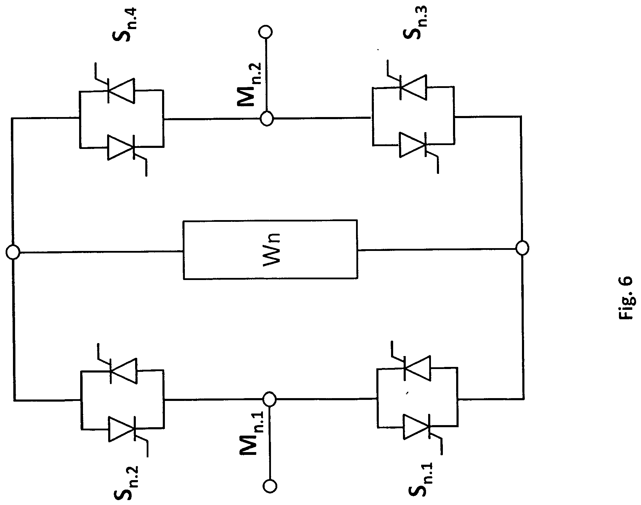

Figur 6 zeigt ein einziges Modul eines erfindungsgemäßen Stufenschalters. Wie erläutert, können mehrere Module n zu einem erfindungsgemäßen Stufenschalter zusammengefügt werden. Jedes Modul besitzt eine Teilwicklung Wn sowie zwei parallele Umgehungspfade, die jeweils eine Reihenschaltung aus zwei Halbleiter-Schaltelementen Sn.1 und Sn.2 bzw. Sn.3 und Sn.4 enthalten. Zwischen jeder Reihenschaltung befinden sich, wie erläutert, Mittenanzapfungen Mn.1 sowie Mn.2. Die Halbleiter-Schaltelemente Sn.1...Sn.4 sind hier als antiparallel geschaltete Thyristoren dargestellt. Es sind im Rahmen der Erfindung auch andere bekannte Halbleiter-Schaltelemente möglich.

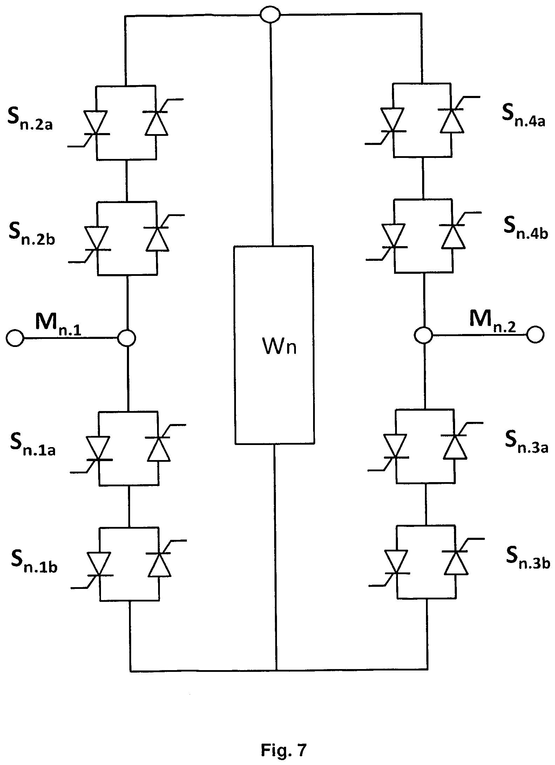

Figur 7 zeigt ein einziges Modul eines weiteren erfindungsgemäßen Stufenschalters. Hierbei besteht jedes Halbleiter-Schaltelement Sn.1...Sn.4 seinerseits aus einer Reihenschaltung von zwei einzelnen Halbleiter-Schaltelementen Sn.1a, Sn.1b; Sn.2a, Sn.2b; Sn.3a, Sn.3b; Sn.4a, Sn.4b. Es ist im Rahmen der Erfindung auch möglich, mehr als zwei einzelne Halbleiter-Schaltelemente jeweils in Reihe oder auch parallel zueinander vorzusehen.

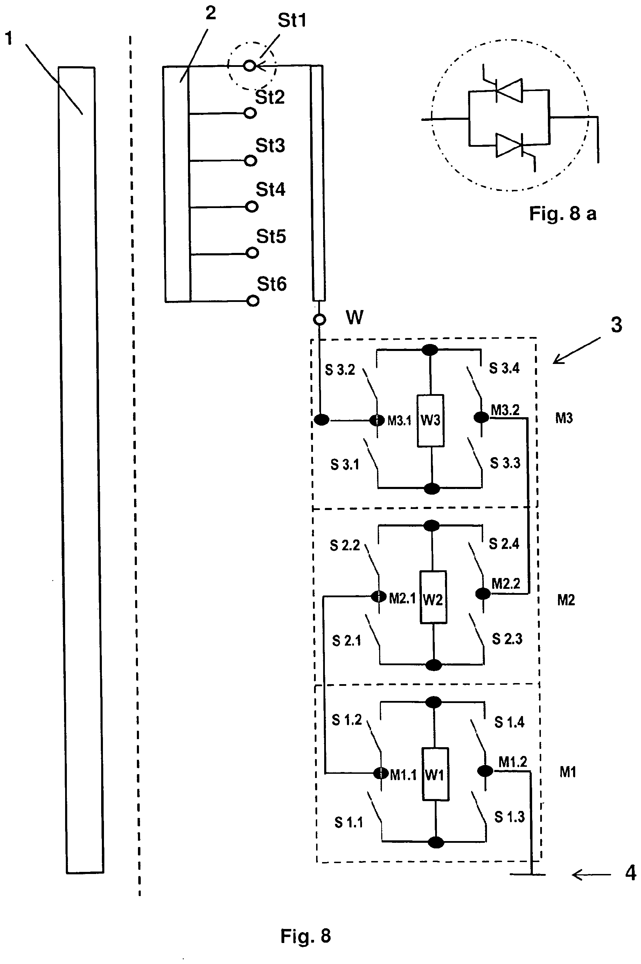

Figur 8 zeigt eine besondere Anwendung des in Figur 1 bereits erläuterten erfindungsgemäßen Stufenschalters. Abweichend von der dortigen Darstellung weist hier die Oberspannungswicklung 2 Wicklungsanzapfungen St1...St6 auf, die auf herkömmliche Weise beschaltet werden können. Dies kann sowohl durch einen nur angedeuteten Stufenwähler oder auch, wie in Figur 8a auszugsweise gezeigt, durch Halbleiter-Schaltelemente, hier etwa ein antiparalleles Thyristorpaar erfolgen. An einem solchen herkömmlichen Stufenschalter, der direkt Wicklungsanzapfungen beschaltet, kann jetzt noch zusätzlich ein erfindungsgemäßer Stufenschalter, hier aufweisend drei Module M1...M3 angeschlossen werden. Bei dieser Ausführungsform ist damit eine grobe Spannungsregelung durch entsprechende Auswahl und Beschaltung einer der Wicklungsanzapfungen St1... St6 sowie eine feinstufigere zusätzliche Spannungsregelung durch den erfindungsgemäßen Stufenschalter möglich.

## Patentansprüche

1. Regelbarer Transformator mit Stufenschalter (3) zur Spannungsregelung an einem Regeltransformator, der eine Unterspannungswicklung (1) und eine Oberspannungswicklung (2) umfasst, umfassend
- wenigstens zwei Module (M1, M2, M3, M4);
wobei
- die Unterspannungswicklung (1) oder die Oberspannungswicklung (2) eine Regelwicklung und wenigstens zwei Teilwicklungen (W1, W2, W3, W4) umfasst;
- jedes Modul (M1...M4) jeweils eine der Teilwicklungen (W1...W4) sowie beidseitig davon zwei Überbrückungspfade umfasst;
- jeder Überbrückungspfad jeweils eine Reihenschaltung aus zwei Halbleiter-Schaltelementen (S1.1, S1.2; S1.3, S1.4; S2.1, S2.2; S2.3, S2.4; S3.1, S3.2; S3.3, S3.4; S4.1, S4.2; S4.3, S4.4) umfasst;
- in jedem Überbrückungspfad zwischen seinen Halbleiter-Schaltelementen (S1.1, S1.2;...; S4.3, S4.4) eine Mittenanzapfung (M1.1, M1.2; M2.1, M2.2; M3.1, M3.2; M4.1, M4.2) vorgesehen ist;
- die Teilwicklungen (W1...W4) unterschiedliche Windungszahlen besitzen;
- in jedem Modul (M1...M4) jeweils eine der beiden Mittenanzapfungen (M1.1; M2.1, M2.2; M3.1, M3.2; M4.2) mit einer Mittenanzapfung der benachbarten Module verbunden ist;
- die eine verbleibende Mittenanzapfung (M1.2) des ersten Moduls (M1) mit der Lastableitung (4) und die eine verbleibende Mittenanzapfung (M3.1; M4.1) des letzten Moduls (M3; M4) mit der Regelwicklung verbindbar sind;
- Teilspannungen sich durch die unterschiedliche Zuschaltung, Gegenschaltung oder Überbrückung der einzelnen Teilwicklungen (W1...W4) ergeben;
- Spannungsstufen (U_{ST}) sich durch Hinzufügen wenigstens einer der Teilspannungen zu der Stufenspannung der Regelwicklung und/oder durch Abziehen wenigstens einer der Teilspannungen von der Stufenspannung der Regelwicklung ergeben;
**dadurch gekennzeichnet dass**,
- wenigstens zwei der Spannungsstufen (U_{ST}) sich redundant erzeugen lassen.

2. Regelbarer Transformator mit Stufenschalter (3) nach dem vorigen Anspruch, wobei
- genau drei Module (M1...M3) vorgesehen sind;
- die Teilwicklungen (W1...W3) der drei Module (M1...M3) im Verhältnis 1:3:6 oder 1:3:9 aufgeteilt sind.

3. Regelbarer Transformator mit Stufenschalter (3) nach Anspruch 1, wobei
- genau vier Module (M1...M4) vorgesehen sind;
- die Teilwicklungen (W1...W4) der vier Module (M1...M4) im Verhältnis 1:3:6:10 aufgeteilt sind.

4. Regelbarer Transformator mit Stufenschalter (3) nach einem der vorigen Ansprüche, wobei die Halbleiter-Schaltelemente (S1.1, S1.2;...; S4.3, S4.4) jeweils ein antiparallel geschaltetes Thyristor- bzw. IGBT-Paar umfassen.

5. Regelbarer Transformator mit Stufenschalter (3) nach einem der vorigen Ansprüche, wobei mindestens eines der Halbleiter-Schaltelemente (Sn.1...Sn.4) aus einer Reihenschaltung von mindestens zwei einzelnen Halbleiter-Schaltelementen (Sn.1a, Sn.1b; Sn.2a, Sn.2b; Sn.3a, Sn.3b; Sn.4a, Sn.4b) besteht.

## Claims

1. Regulable transformer with tap changer (3) for voltage regulation at a regulating transformer, which comprises a lower voltage winding (1) and an upper voltage winding (2), comprising
- at least two modules (M1, M2, M3, M4);
wherein
- the lower voltage winding (1) or the upper voltage winding (2) comprises a regulating winding and at least two part windings (W1, W2, W3, W4);
- each module (M1...M4) comprises a respective one of the part windings (W1 ... W4) as well as two bridging-over paths on either side thereof;
- each bridging-over path comprises a respective series circiut of two semiconductor switching elements (S1.1, S1.2; S1.3, S1.4; S2.1, S2.2; S2.3, S2.4; S3.1, S3.2; S3.3, S3.4; S4.1, S4.2; S4.3, S4.4);
- a centre tap (M1.1, M1.2; M2.1, M2.2; M3.1, M3.2; M4.1, M4.2) is provided in each bridging-over path between its semiconductor switching elements (S1.1; S1.2; ... S4.3 S4.4);
- the part windings (W1 ... W4) have different numbers of windings;
- in each module (M1 ... M4) a respective one of the two centre taps (M1.1; M2.1, M2.2; M3.1, M3.2; M4.2) is connected with a centre tap of the adjacent module;
- the one remaining centre tap (M1.2) of the first module (M1) is connected with the load diverter (4) and the one remaining centre tap (M3.1, M4.1) of the last module (M3; M4) is connectible with the regulating winding (2);
- sub-voltages arise due to the different switching on, opposite switching or bridging over of the individual part windings (W1 ... W4); and
- voltage steps (U_{ST}) arise through addition of at least one of the sub-voltages to the step voltage of the regulating winding and/or through subtraction of at least one of the sub-voltages from the step voltage of the regulating winding (2);
**characterised in that**
- at least two of the voltage steps (U_{ST}) can be produced in redundant manner.

2. Regulable transformer with tap changer (3) according to the preceding claim, wherein
- exactly three modules (M1 ... M3) are provided; and
- the part windings (W1 ... W3) of the three modules (M1 ... M3) are divided up in the ratio 1:3:6 or 1:3:9.

3. Regulable transformer with tap changer (3) according to claim 1, wherein
- exactly four modules (M1 ... M4) are provided; and
- the part windings (W1 ... W4) of the four modules (M1 ... M4) are divided up in the ratio 1:3:6:10.

4. Regulable transformer with tap changer (3) according to any of the preceding claims, wherein the semiconductor switching elements (S1.1, S1.2 ... S4.3, S4.4) each comprise a thyristor or IGBT pair in anti-parallel connection.

5. Regulable transformer with tap changer (3) according to any one of the preceding claims, wherein at least one of the semiconductor switching elements (Sn.1 ... Sn.4) consists of a series connection of at least two individual semiconductor switching elements (Sn.1a, Sn.1b; Sn.2a, Sn.2b; Sn.3a, Sn.3b; Sn.4a, Sn.4b).

## Revendications

1. Transformateur réglable comprenant un commutateur à gradins (3) permettant de réguler la tension sur un transformateur de réglage qui comporte un enroulement basse tension (1) et un enroulement haute tension (2) comprenant :
- au moins deux modules (M1, M2, M3, M4),
dans lequel :
- l'enroulement basse tension (1) ou l'enroulement haute tension (2) comporte un enroulement de réglage et au moins deux enroulements partiels (W1, W2, W3, W4),
- chaque module (M1...M4) comporte respectivement l'un des enroulements partiels (W1...W4) ainsi que de part et d'autre de celui-ci deux chemins de pontage,
- chaque chemin de pontage comporte respectivement un montage en série de deux éléments de commutation à semi-conducteur (S1-1, S1-2, S1-3, S1-4, S2-1, S2-2, S2-3, S2-4, S3-1, S3-2, S3-3, S3-4, S4-1, S4-2, S4-3, S4-4),
- dans chaque chemin de pontage, il est prévu une prise médiane (M1-1, M1-2, M2-1, M2-2, M3-1, M3-2, M4-1, M4-2) entre ses éléments de commutation à semi-conducteur (S1-1, S1-2,..., S4-3, S4-4),
- les enroulements partiels (W1...W4) ont des nombres de spires différents,
- dans chaque module (M1...M4), l'une des deux prises médianes (M1-1, M2-1, M2-2, M3-1, M3-2, M4-2) est respectivement reliée à une prise médiane du module voisin,
- la prise médiane restante (M1-2) du premier module (M1) peut être reliée à la dérivation ce charge (4) et la prise médiane restante (M3-1, M4-1) du dernier module (M3, M4) peut être reliée à l'enroulement de réglage,
- des tensions partielles se présentent du fait des différents branchements, branchements en opposition ou pontages des enroulements partiels individuels (W1... W4),
- des gradins de tension (U_{ST}) se présentent du fait de l'addition d'au moins l'une des tentions partielles à la tension de gradin de l'enroulement de réglage et/ou du retrait d'au moins l'une des tensions partielles de la tension de gradin de l'enroulement de réglage,
**caractérisé en ce qu'**
- au moins deux des gradins de tension (U_{ST}) peuvent être produits de façon redondante.

2. Transformateur réglable comprenant un commutateur à gradins (3) conforme à la revendication précédente,
dans lequel :
- il est prévu exactement trois modules (M1...M3),
- les enroulements partiels (W1...W3) des trois modules (M1...M3) sont répartis selon un rapport 1:3:6 ou 1:3:9.

3. Transformateur réglable comprenant un commutateur à gradins (3) conforme à la revendication 1,
dans lequel :
- il est prévu exactement quatre modules (M1...M4),
- les enroulements partiels (W1...W4) des quatre modules (M1...M4) sont répartis selon un rapport 1:3:6:10.

4. Transformateur réglable comprenant un commutateur à gradin (3) conforme à l'une des revendications précédentes,
dans lequel les éléments de commutation à semi-conducteur (S1-1, S1-2,...,S4-3, S4-4) comportent chacun une paire de thyristors ou d'IGBT branchés en antiparallèle.

5. Transformateur réglable comprenant un commutateur à gradins (3) conforme à l'une des revendications précédentes,
dans lequel au moins l'un des éléments de commutation à semi-conducteur (Sn1...Sn4) est constitué par un montage en série d'au moins deux éléments de commutation à semi-conducteur individuels (Sn.1a, Sn.1b, Sn.2a, Sn.2b, Sn.3a, Sn.3b, Sn.4a, Sn.4b).
